# FASCICULE DE BREVET EUROPEEN

(11) **EP 1 720 759 B1**
(45) Date de publication et mention de la délivrance du brevet: **26.09.2007**
(21) Numéro de dépôt: 05730916.3
(22) Date de dépôt: 23.02.2005
(51) Int. Cl.: B62D 29/04

(54) **ELEMENT INTERMEDIAIRE DE SUPPORT D UNE AILE AVANT D UN VEHICULE AUTOMOBILE ET SON PROCEDE DE FABRICATION**
ZWISCHENVORDERKOTFLÜGELSTÜTZELEMENT FÜR EIN KRAFTFAHRZEUG UND HERSTELLUNGSVERFAHREN DAFÜR
INTERMEDIATE FRONT-FENDER-SUPPORT ELEMENT FOR A MOTOR VEHICLE AND PRODUCTION METHOD THEREOF

(30) Priorité: 24.02.2004 FR 0401837
(43) Date de publication de la demande: 15.11.2006
(73) Titulaire: Inoplast, 07100 Annonay (FR); Renault SAS, 92100 Boulogne Billancourt (FR)
(72) Inventeur: MARTIN, Laurent, René, Félix, F-07340 PEAUGRES (FR); BOKSEBELD, Marcel, Jean-Marie, F-38150 ANJOU (FR); GLAUMOT, Olivier, 91470 Forges Les Bains (FR); TETU, Yvon, F-92250 LA GARENNE COLOMBES (FR)
(74) Mandataire: de la Bigne, Guillaume Michel Marie
(86) Numéro de dépôt international: PCT/FR2005/000429
(87) Numéro de publication internationale: WO 2005/090147

(56) Documents cités:
- EP-A- 0 443 767
- FR-A- 2 270 086
- GB-A- 2 362 615
- PATENT ABSTRACTS OF JAPAN vol. 2002, no. 04, 4 août 2002 (2002-08-04) & JP 2001 334958 A (MAZDA MOTOR CORP), 4 décembre 2001 (2001-12-04)

## Description

La présente invention concerne un élément intermédiaire de support d'une aile avant d'un véhicule automobile, ainsi qu'un procédé de moulage d'un tel élément intermédiaire de support.

Actuellement, les ailes avant des véhicules automobiles sont généralement fixées directement aux poutres supérieures des châssis de ces véhicules. Lorsque tel est le cas, un inconvénient des véhicules automobiles actuels est que rien n'est prévu pour amortir un choc entre une personne et une aile avant de ces véhicules.

Dans GB-A-2 362 615, est décrit un élément de fixation d'une aile, d'un garde-bout ou d'un capot de véhicule sur le châssis d'un véhicule. Cet élément de fixation comprend plusieurs portions successives, qui sont sensiblement identiques. Une embase de fixation et une paroi montante avant pourvue d'un rebord supérieur sont commun à ces différentes portions, dont chacune comprend des moyens de solidarisation de l'élément à fixer, ainsi qu'une paroi oblique avant se prolongeant vers le haut par la paroi montante et se raccordant vers le bas à l'embase de fixation, par une charnière avant. Des montants ou nervures verticales arrière sont disposés de part et d'autre de chacune des portions successives. Chacun d'eux ne se raccorde à l'embase que par un seul côté, et plus précisément par une zone de moindre résistance. Chaque montant se raccorde par ailleurs à la paroi montante qu'il relie donc à l'embase. Lorsque le véhicule heurte un obstacle, les zones de moindre résistance cèdent et les parois inclinées, ainsi que la paroi montante, basculent vers l'arrière, autour des charnières. GB-A-2 362 615 propose une solution non pas au problème de l'amortissement des chocs descendants et appliqués sur le dessus du capot ou de l'aile avant d'un véhicule, mais au problème de l'amortissement des chocs dirigés vers l'arrière. Or, lorsqu'un véhicule automobile progressant normalement vers l'avant percute au niveau des jambes un piéton, la tête de celui-ci heurte bien souvent le dessus du capot ou de l'une des ailes avant de ce véhicule.

En outre, il paraît difficile que la solution proposée dans GB-A-2 362 615 puisse satisfaire à certaines exigences en matière de comportement dans le cas de l'application d'un effort statique, qui peut par exemple résulter de l'appui d'une personne assise sur le véhicule. Parmi ces exigences, il y a notamment que l'élément de fixation ne doit pas trop se déformer, et encore moins céder, si un tel effort statique est appliqué sur l'élément fixé par son intermédiaire.

L'invention a au moins pour but de réduire le nombre et la gravité des blessures consécutives aux accidents entre un piéton et un véhicule automobile.

A cet effet, l'invention a pour objet un élément intermédiaire de support d'une aile avant d'un véhicule automobile, cet élément de support étant à même d'être monté sur une poutre supérieure du châssis du véhicule automobile et comportant un corps et au moins une protubérance sécable qui est en saillie vers le haut et à laquelle est destinée à être fixée ladite aile avant, ladite protubérance comportant au moins une paroi avant reliée par une zone frangible audit corps, une paroi arrière reliée par la zone frangible audit corps et une troisième paroi que la zone frangible relie audit corps et qui relie rigidement la paroi avant et la paroi arrière l'une à l'autre.

Selon d'autres caractéristiques avantageuses de cet élément intermédiaire de support :
- à l'opposé de la troisième paroi, la protubérance sécable comporte une quatrième paroi que la zone frangible relie audit corps et qui relie rigidement la paroi avant et la paroi arrière l'une à l'autre ;
- la zone frangible entoure la protubérance sécable ;
- la zone frangible est une zone amincie ayant une épaisseur qui peut être différente entre deux régions de cette zone amincie et qui est moindre notamment que le corps et que la paroi avant, la paroi arrière et la troisième paroi de la protubérance ;
- la troisième paroi de la protubérance est percée d'un trou pour le passage de moyens de fixation de l'aile à la protubérance ;
- le corps comporte une paroi supérieure qui est pourvue de la protubérance, au moins une rampe supérieure et oblique de dégagement sur le côté d'un rebord de l'aile avant équipant la paroi supérieure et, à son point le plus bas, atteignant un bord latéral de cette paroi supérieure ;
- il est moulé en un polymère thermodurcissable ;
- le polymère thermodurcissable est chargé en fibres et en particules non filiformes généralement appelées charges ;
- il contient entre 25 et 40% en masse de polymère thermodurcissable, entre 18 et 25% en masse de fibres de verre et entre 40 et 50% en masse de particules non filiformes ;

Un polymère thermodurcissable est avantageux pour le moulage d'un élément intermédiaire de support conforme à l'invention du fait de :
- son aptitude à casser sous un choc bref ;
- ses propriétés mécaniques en statique, et notamment sa raideur statique qui doit être telle qu'un effort de 15 à 30 DaN doit pouvoir être appliqué progressivement sur la protubérance, au niveau du point de fixation de l'aile, sans que cette protubérance ne se déplace de plus de 1 mm ;
- sa tenue en température grâce à laquelle l'élément intermédiaire de support peut subir un traitement par cataphorèse en même temps que le châssis, sans se détériorer, et peut donc être monté sur ce châssis au ferrage, c'est-à-dire avant le traitement par cataphorèse ;
- son faible retrait au moulage et son coefficient de dilatation linéaire proche de l'acier, grâce auxquels l'élément intermédiaire de support peut servir de référence pour le positionnement d'un ou plusieurs équipements avant tels qu'un ensemble d'éclairage, la façade avant et/ou le capot du véhicule, lors du montage de ces éléments, et peut éventuellement être aussi utilisé pour maintenir ultérieurement ce positionnement lors de l'utilisation normale du véhicule,
- sa capacité à ne fluer que faiblement dans le temps lorsqu'il est serré par exemple par des moyens de fixation. Cette capacité permet de fixer l'élément intermédiaire de support sans entretoise métallique.

Selon encore d'autres caractéristiques avantageuses de l'élément de support conforme à l'invention :
- le polymère thermodurcissable est électriquement conducteur, pour permettre la peinture par revêtement électrostatique d'une aile avant montée par l'intermédiaire de l'élément de support sur un châssis d'un véhicule automobile ;
- il comporte des moyens de positionnement d'au moins un équipement avant du véhicule automobile, tel qu'un ensemble d'éclairage, une façade avant ou un capot.

Avantageusement, en coupe selon un quelconque plan vertical antéro-postérieur, la protubérance est à l'intérieur d'un premier cercle d'enveloppe qui a son centre au milieu d'une portion avant de la zone frangible, devant la protubérance, et passe par le milieu d'une portion arrière de la zone frangible, derrière la protubérance. Ainsi, lors d'un choc, la protubérance traverse le corps sans buter contre celui-ci, même dans le cas où la portion arrière de la zone frangible rompt en premier, du fait d'une inclinaison du choc par rapport à la verticale, et où la protubérance bascule ensuite autour de la partie avant de la zone frangible.

Avantageusement, en coupe selon un quelconque plan vertical antéro-postérieur, la protubérance est à l'intérieur d'un deuxième cercle d'enveloppe qui a son centre au milieu de la portion arrière de la zone frangible et passe par le milieu de la portion avant de la zone frangible. Ainsi, lors d'un choc, la protubérance traverse le corps sans buter contre celui-ci, même dans le cas où la portion avant de la zone frangible rompt en premier.

De préférence, la zone frangible a une épaisseur comprise entre 0,2 et 2,5 mm, une largeur comprise entre 1 et 10 mm et une longueur moyenne comprise entre 200 et 230 mm. On veut que la zone frangible soit essentiellement soumise à un cisaillement lors du choc. L'épaisseur de la zone frangible peut ne pas être constante autour de la protubérance, tout en restant comprise entre 0,2 et 2,5 mm.

Pour que la zone frangible ait le comportement attendu lors du choc, la tolérance sur son épaisseur, c'est-à-dire la différence entre son épaisseur réelle après moulage et une épaisseur prédéterminée, doit être la plus faible possible, et notamment comprise entre +0,15 mm et -0,15 mm. Le procédé classique de moulage par compression ne permet pas d'atteindre une telle tolérance d'une manière sûre et répétable. De plus, le procédé classique de moulage par injection ne peut pas être employé pour fabriquer l'élément intermédiaire de support du fait de la trop faible épaisseur de la zone frangible. S'il l'était, un échauffement local et donc une prépolymérisation aurait lieu au niveau de la zone frangible lors de l'injection de la matière dans le moule, ce qui se traduirait par une dégradation des propriétés mécaniques de l'élément intermédiaire de support.

Afin de remédier à ces inconvénients, l'invention a également pour un objet un procédé de moulage d'un élément intermédiaire de support tel que défini ci-dessus, dans lequel on utilise un moule qui comprend au moins une partie fixe et une partie mobile et qui délimite une chambre de moulage et au moins un passage d'évacuation communiquant avec cette chambre de moulage, cette dernière comportant au moins une portion qui correspond à la zone amincie de l'élément intermédiaire de support et qui se trouve entre la partie fixe et la partie mobile du moule, ce procédé comportant des étapes dans lesquelles :
- a) on approvisionne la chambre de moulage avec plus de pâte à mouler que ce qui est nécessaire au moulage de l'élément intermédiaire de support, puis
- b) on déplace la partie mobile du moule vers la partie fixe du moule de manière à faire fluer la pâte à mouler entre ces parties fixe et mobile et à évacuer un surplus de pâte à mouler par le passage d'évacuation, jusqu'à ce que le moule délimite, aux retraits près, la forme finale de l'élément intermédiaire de support.

A la fin de l'étape b), le surplus de pâte dans le moule s'échappe par le passage d'évacuation et ne s'oppose donc pas au rapprochement des parties fixe et mobile du moule jusqu'à ce que les zones frangibles atteignent l'épaisseur prédéterminée.

Avantageusement, dans l'étape b), on déplace la partie mobile du moule selon une direction sensiblement perpendiculaire à la zone amincie de l'élément intermédiaire de support en cours de moulage.

L'invention sera bien comprise à la lecture de la description qui va suivre, donnée uniquement à titre d'exemple et faite en se référant aux dessins annexés, sur lesquels :
- la figure 1 est une coupe transversale, schématique et simplifiée de la portion avant gauche d'un véhicule automobile dont chacune des ailes avant est supportée par un élément intermédiaire conforme à l'invention ;
- la figure 2 est une vue en perspective de l'élément intermédiaire qui supporte l'aile avant gauche du véhicule partiellement représenté à la figure 1 ;
- la figure 3 est une autre vue en perspective de l'élément intermédiaire de support représenté à la figure 2 ;
- la figure 4 est une vue de dessus de l'élément intermédiaire de support des figures 2 et 3 qui n'a pas encore été débarrassé de carottes provenant de son moulage ;
- la figure 5 est une section schématique partielle selon la ligne V-V à la figure 4 ;
- la figure 6 est une section schématique selon la ligne VI-VI tracée à la figure 4 et représente une portion de l'aile avant gauche du véhicule, outre l'élément intermédiaire de support représenté aux figures 2 à 5 ;
- la figure 6A est une section analogue à la figure 6 et illustre le comportement de l'élément intermédiaire de support des figures 2 à 5 en cas de choc ;
- la figure 7 est une section analogue à la figure 5 et illustre un premier comportement de l'élément intermédiaire de support des figures 2 à 6 en cas de choc ;
- la figure 8 est une section analogue à la figure 5 et illustre un deuxième comportement de l'élément intermédiaire de support des figures 2 à 6 en cas de choc ;
- la figure 9 est une section d'un moule selon une ligne correspondant à la ligne V-V de la figure 4 et illustre une étape d'un procédé, conforme à l'invention, de moulage de l'élément de support représenté notamment aux figures 2 à 5 ;
- la figure 10 est une section partielle du moule de la figure 9 selon une ligne correspondant à la ligne X-X de la figure 4 et illustre la même étape du procédé de moulage que la figure 9 ;
- la figure 11 est une section analogue à la figure 9 et illustre une autre étape du procédé du moulage ;
- la figure 12 est une section partielle analogue à la figure 10 et illustre la même étape du procédé de moulage que la figure 11.

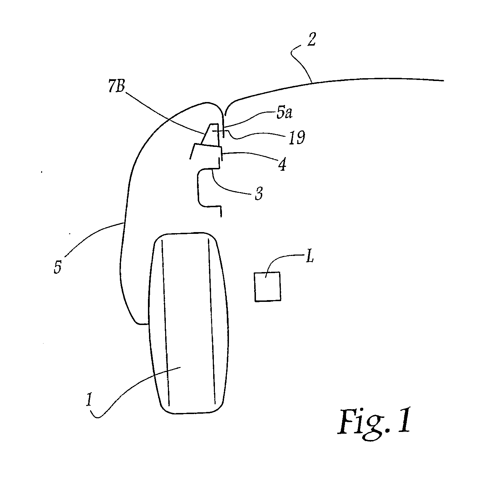

Sur la figure 1 est représentée schématiquement une partie de la carrosserie et du châssis d'un véhicule automobile. Ce châssis et cette carrosserie ont une partie avant droite qui est symétrique de leur partie avant gauche et qui n'est ni représentée à la figure 1, ni décrite dans ce qui suit.

Dans le présent texte et dans les revendications annexées, les termes « avant », « arrière », « droit » et « gauche », ainsi que les termes analogues, se réfèrent au sens normal de progression du véhicule automobile.

Sur la figure 1, la référence 1 et la référence 2 désignent respectivement la roue avant gauche et le capot avant du véhicule automobile, dont le châssis comporte un longeron L et une poutre supérieure gauche 3. Sur cette dernière est montée un élément intermédiaire 4 qui supporte l'aile avant gauche 5 de la carrosserie du véhicule automobile.

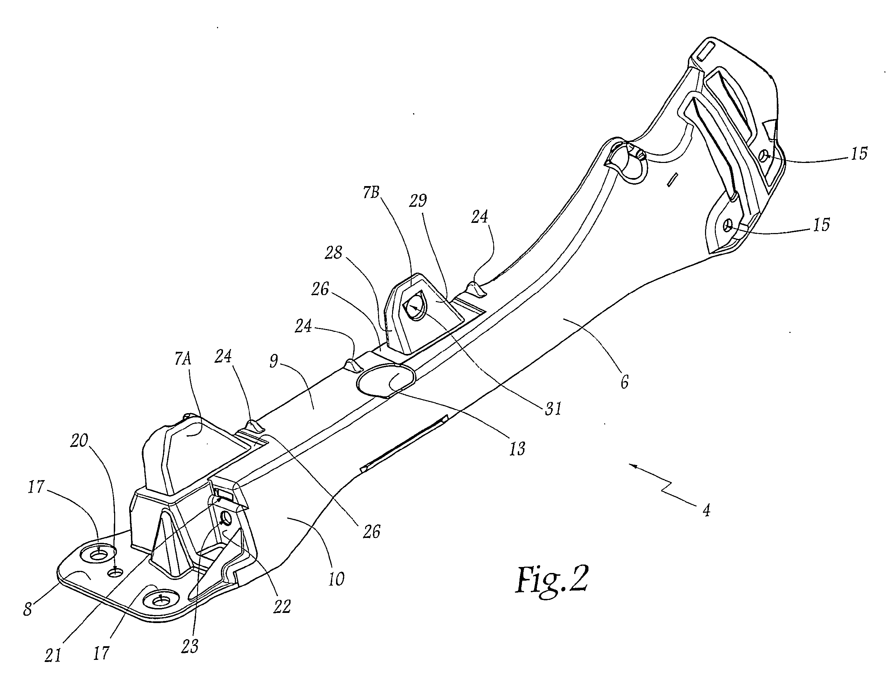

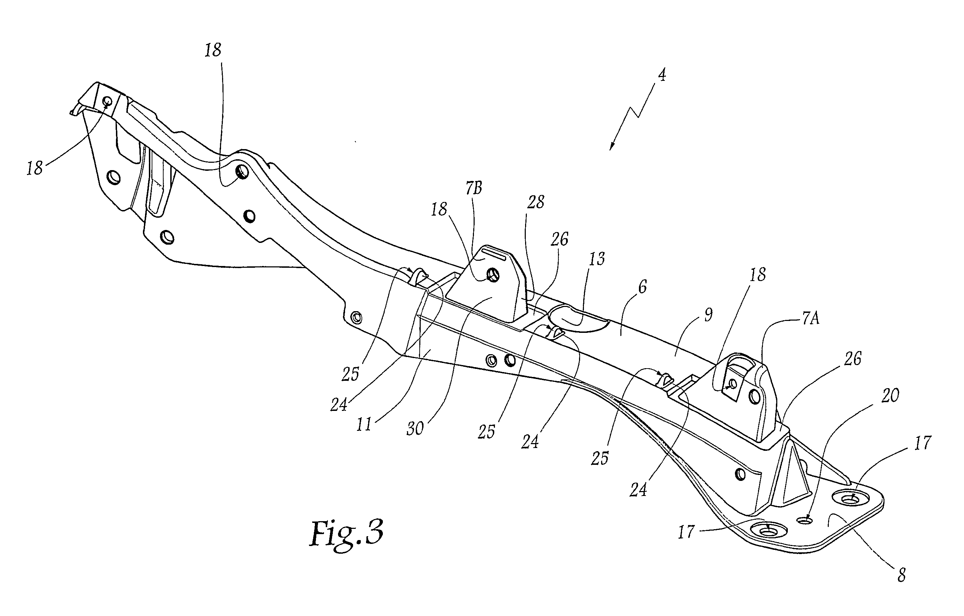

Cet élément 4, conforme à l'invention, est représenté seul aux figures 2 à 4. Il comporte un corps allongé 6, qui est pourvu de protubérances supérieures et sécable 7A et 7B, au nombre de deux dans l'exemple représenté. Une fois l'élément 4 installé, ce corps 6 s'étend le long de la poutre supérieure 3 et, pour l'essentiel, au-dessus de cette poutre 3.

Ce corps 6, qu'une embase de montage 8 prolonge vers l'avant, comporte trois parois longitudinales, à savoir une paroi supérieure 9 et deux parois latérales, l'une gauche et référencée 10 et l'autre droite et référencée 11, qui descendent à partir des deux bords latéraux de la paroi supérieure 9.

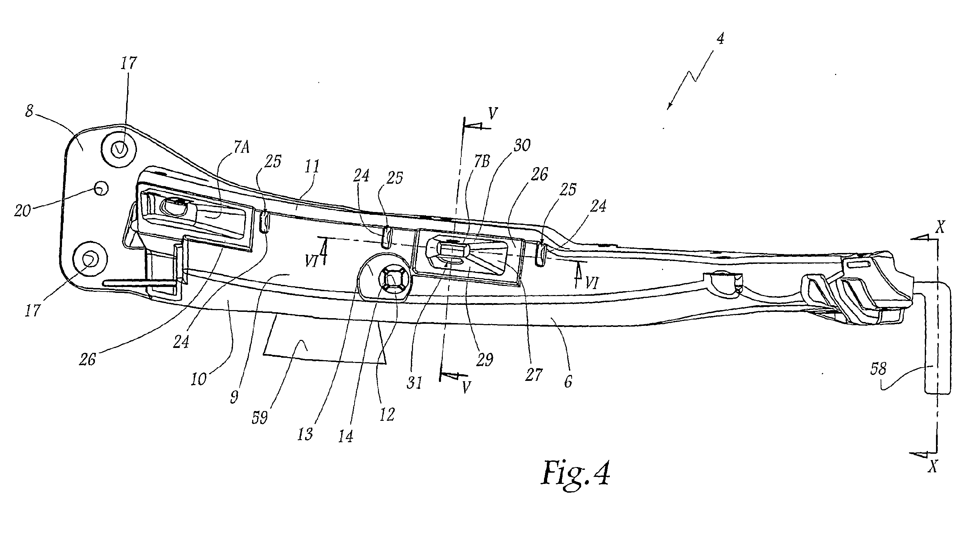

A distance de ses deux extrémités, le corps 6 comporte une embase de montage 12, qui est visible à la figure 4 et qu'une portion creuse 13 relie rigidement à la paroi supérieure 9 du corps 6. L'embase 12 est percée d'un trou 14 pour le passage de moyens, non représentés, de fixation de l'élément 4 à la poutre supérieure 3.

Au niveau de l'extrémité arrière du corps 6, deux trous 15 pour le passage de moyens, non représentés, de fixation de l'élément 4 à la poutre supérieure 3 sont percés dans la paroi gauche 10.

L'embase avant de montage 8 est percée de deux trous 17 pour le passage de moyens, non représentés, de fixation de l'élément de support 4 sur la poutre supérieure 3.

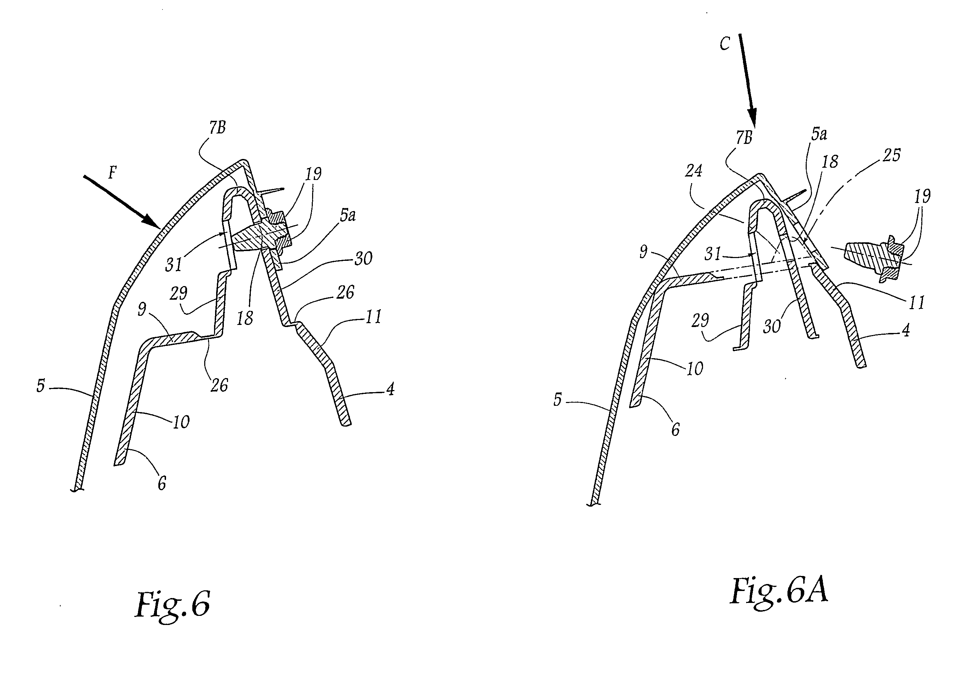

L'aile avant 5 est fixée sur l'élément de support 4 en quatre points, qui sont répartis le long de cet élément de support 4 et au niveau de chacun desquels est prévu un trou 18 pour le passage de moyens de fixation, dont certains sont représentés schématiquement et référencés 19 à la figure 6. Parmi ces points de fixation, les deux qui sont les plus en arrière se trouvent au niveau du corps 6. Chacun des deux autres points de fixation de l'aile avant 5 sur l'élément de support 4 se trouve au niveau de l'une des protubérances sécable 7A et 7B, qui sont décalées longitudinalement l'une de l'autre. Notons que la protubérance sécable 7A se trouve au niveau de l'extrémité avant du corps 6, à proximité de l'embase de montage avant 8, tandis que la protubérance sécable 7B est située au voisinage de l'embase de montage 12, c'est-à-dire à distance des extrémités avant et arrière du corps 6.

Un trou 20 de positionnement de la façade avant, non représentée, du véhicule automobile est percé dans l'embase de montage 8. Le bord de ce trou 20 est destiné à coopérer avec un plot complémentaire équipant cette façade avant, afin de définir la position définitive de celle-ci.

De même, une fente 21 et un trou 23 permettant le positionnement de l'ensemble d'éclairage avant gauche ou optique phare avant gauche, non représenté, et son maintien en position jusqu'à sa fixation sont ménagés dans une paroi avant 22 que comporte le corps 6 et qui raccorde la paroi supérieure 9 à l'embase de montage 8. Le bord du trou 23 est destiné à coopérer avec un organe complémentaire de l'ensemble d'éclairage avant gauche, afin de définir la position définitive de celui-ci. La fente 21 permet d'assembler par clipsage cet ensemble d'éclairage à l'élément 4.

Dans le même ordre d'idée, notons que l'aile avant 5 est montée sur l'élément de support 4 sans possibilité de réglage de sa position, laquelle est en effet déterminée par celle de cet élément de support 4.

La paroi supérieure 9 porte trois nervures supérieures 24, qui sont décalées longitudinalement les unes des autres et sont attenantes à la zone de jonction de la paroi droite 11 et de la paroi supérieure 9 du corps 6. Chaque nervure 24 définit une rampe supérieure et oblique de dégagement 25, qui, à son point le plus bas, affleure la paroi droite 11 du corps 6.

Les protubérances 7A et 7B sont portées par la paroi supérieure 9 et font saillie vers le haut. Elles sont attenantes à la paroi droite 11 qui, des deux parois 10 et 11, est celle se trouvant le plus à l'intérieur du véhicule automobile. Une zone frangible 26 relie chacune d'elles au corps 6.

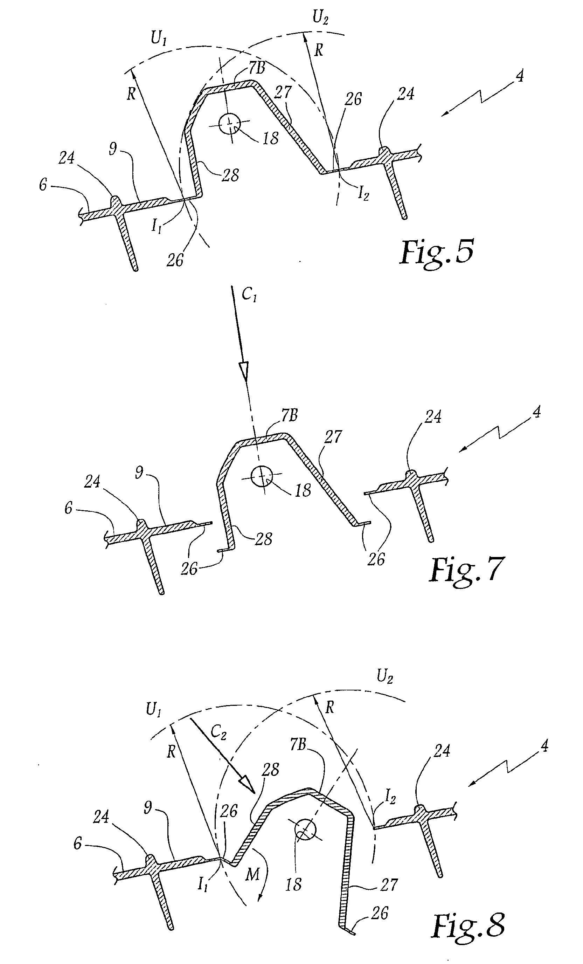

Comme les protubérances sécables 7A et 7B sont globalement semblables, seule celle référencée 7B est décrite ci-après et représentée en coupe aux figures 5 et 6.

La protubérance 7B comporte quatre parois périphériques deux à deux en regard, à savoir une paroi arrière 27, une paroi avant 28, une paroi gauche 29 et une paroi droite 30. La paroi gauche 29 relie rigidement la paroi arrière 27 à la paroi avant 28. Il en est de même de la paroi droite 30. Comme elle entoure la protubérance 7B, la zone frangible 26 correspondante relie chacune des parois 27, 28, 29 et 30 au corps 6.

Le trou 18 prévu au niveau de la protubérance 7B est percé dans la paroi droite 30, qui n'est que légèrement décalée latéralement de la paroi droite 11 du corps 6 et qui, des deux parois 29 et 30, est celle se trouvant le plus à l'intérieur du véhicule automobile. Un autre trou 31 est ménagé dans la protubérance 7B et permet d'accéder à l'intérieur de cette protubérance pour pouvoir au besoin y manipuler les moyens de fixation 19. Ces derniers sont connus en eux-mêmes et classiquement utilisés pour la fixation d'éléments de carrosserie.

La présence des parois gauche 29 et droite 30, en complément des parois arrière 27 et avant 28, facilite le moulage de la protubérance 7B. De plus, elle fait que la zone frangible 26 reliant déjà les parois arrière 27 et avant 28 au corps 6 peut également relier la paroi gauche 29 et/ou la paroi droite 30 à ce même corps 6, ce qui augmente la capacité de la zone frangible 26 à ne pas céder lorsque la protubérance 7B est soumise à un effort statique ayant une composante transversale. Un tel effort statique, matérialisé par la flèche F à la figure 6, peut par exemple résulter de l'appui d'une personne assise sur l'aile avant 5.

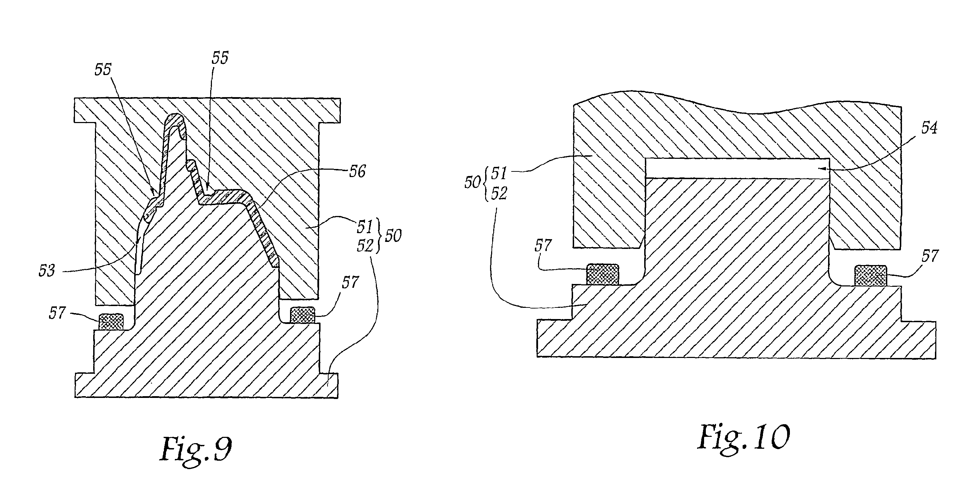

En coupe selon un quelconque plan vertical antéro-postérieur tel que le plan de coupe des figures 5, 7 et 8, la protubérance 7B est inscrite dans deux cercles d'enveloppe U₁ et U₂ visibles aux figures 5 et 8. Le centre I₁ du cercle U₁ et le centre I₂ du cercle U₂ se trouvent respectivement au milieu de la portion avant de la zone frangible 26 et au milieu de la portion arrière de cette zone frangible 26. Le cercle U₁ passe par I₂, tandis que le cercle U₂ passe par I₁. En d'autres termes, les cercles U₁ et U₂ ont un même rayon R égal à la distance entre I₁ et I₂.

La zone frangible 26 est une zone amincie ayant une épaisseur moindre que le corps 6 et que la protubérance 7B. Plus précisément, l'épaisseur de la zone frangible 26 est avantageusement comprise entre 0,2 et 2,5 mm. Des épaisseurs d'environ 0,9 mm pour la zone frangible 26, d'environ 3 mm pour la protubérance 7B et d'environ 3,5 mm pour le corps 6 ont donné des résultats très satisfaisants.

L'épaisseur de la zone frangible 26 peut ne pas être constante. En particulier, elle peut être plus ou moins faible selon qu'elle est mesurée à l'avant, à l'arrière, à droite ou à gauche de la protubérance 7B. L'évolution de l'épaisseur de la zone frangible 26 autour de la protubérance 7B peut notamment être configurée de manière à augmenter la capacité de cette zone frangible à ne pas céder dans le cas de l'application d'un effort statique du type de celui référence F à la figure 6.

L'élément de support 4 est moulé en un polymère thermodurcissable chargé en fibres de renforcement hachées, par exemple en verre, et en particules non-filiformes ou charges, telles que des particules minérales. Des résultats très satisfaisants ont été obtenus lorsque le polymère thermodurcissable est un polyester. La proportion de polymère thermodurcissable dans le matériau composite dont est fait l'élément de support 4 est avantageusement comprise entre 25 et 40% en masse. La proportion de fibres de verre dans le matériau composite dont est fait l'élément de support 4 est avantageusement comprise entre 18 et 25% en masse. La proportion de particules non-filiformes dans le matériau composite dont est fait l'élément de support 4 est avantageusement comprise entre 40 et 50% en masse.

Les fibres de renforcement ont une longueur moyenne avantageusement comprise entre 10 et 30 mm.

Lorsqu'il est tel que défini ci-dessus, le matériau composite dont est fait l'élément de support 4 s'est révélé être très satisfaisant sur au moins trois points. Premièrement, il supporte sans s'altérer des températures pouvant atteindre 210°C, de sorte qu'il est possible de traiter par cataphorèse un châssis déjà muni d'un élément de support 4.

Deuxièmement, en employant ce matériau composite, les éléments 4 peuvent être fabriqués avec une très faible dispersion dimensionnelle, si bien qu'une fois monté, l'élément de support 4 peut servir de référence pour le positionnement du capot avant du véhicule automobile, de la façade avant du véhicule automobile, de l'ensemble gauche d'éclairage du véhicule automobile et de l'aile avant gauche 5 du véhicule automobile.

Troisièmement, grâce à ce matériau composite, les zones frangibles 26, qui sont plus précisément sécables, présentent le comportement souhaité en cas de rupture. En particulier, si cette rupture a lieu, elle est brève, par comparaison au cas où l'élément de support 4 serait moulé en un polymère thermoplastique. Or, on sait que la boîte crânienne des êtres humains est à même de supporter des chocs brefs, mais qu'elle est endommagée par des chocs longs.

Avantageusement, le matériau dont est fait l'élément de support 4 contient des particules de carbone en quantité telle que cet élément 4 soit conducteur électriquement, afin que, même montée sur le châssis avec interposition de l'élément de support 4, l'aile avant 5 puisse être peinte par revêtement électrostatique.

Lorsque l'élément de support 4 est monté sur la poutre supérieure 3, les protubérances 7A et 7B sont au-dessus d'un espace vide qui est plus haut qu'elles et qui les sépare de la poutre supérieure 3. Cela résulte de ce que les embases de montage 8 et 12 sont décalées au moins vers le bas, d'une hauteur supérieure à celle des protubérances 7A et 7B, de la paroi supérieure 9 qui porte ces protubérances 7A et 7B.

Lorsque, après avoir été percuté au niveau des jambes par le véhicule automobile, un piéton heurte l'aile avant 5, au moins l'une des zones frangibles 26 cède, si le choc est suffisamment important, puis la protubérance sécable correspondante 7A ou 7B passe à travers la paroi supérieure 9 du corps 6. Lors de cela, les rampes 25 dévient, si nécessaire, le rebord 5a de l'aile 5 sur le côté droit de l'élément de support 4, ainsi qu'on peut le voir à la figure 6A où une nervure 24 et la portion de la paroi 9 portant cette nervure 24 ont été ajoutées en trait mixte et où la flèche C symbolise un choc.

En absorbant une partie de l'énergie du choc entre le piéton et l'aile avant 5, la rupture de la ou des zones frangibles 26 amortit ce choc, ce qui tend à réduire le risque de blessure du piéton et, si blessures il y a, la gravité de ces blessures. Il convient d'envisager plus particulièrement un premier et un deuxième type de choc. Les chocs du premier type, dont un exemple est symbolisé par la flèche C₁ à la figure 7, sont sensiblement perpendiculaires à la portion supérieure de l'aile avant 5. Lorsqu'a lieu le choc C₁, la portion avant et la portion arrière de la zone frangible 26 entourant la protubérance 7B rompent sensiblement en même temps, ce qui mène à la situation illustrée à la figure 7.

Les chocs du deuxième type, dont un exemple est symbolisé par la flèche C₂ à la figure 8, sont obliques par rapport à la portion supérieure de l'aile avant 5. Lorsqu'a lieu le choc C₂, la portion arrière de la zone frangible 26 entourant la protubérance 7B rompt en premier, si bien que cette protubérance bascule autour de la portion avant de la zone frangible 26, ce que symbolise la flèche M tracée à la figure 8. Comme la protubérance 7B est à l'intérieur du cercle U₁, la protubérance 7B n'est pas stoppée brutalement par le corps 6 lorsqu'elle bascule ainsi. Il en est de même si le choc est tel que la portion avant de la zone frangible 26 entourant la protubérance 7B rompt en premier, puisque cette protubérance 7B est à l'intérieur du cercle U₂.

Bien entendu, le comportement de la protubérance 7A en cas de choc est semblable à celui de la protubérance 7B, qui vient d'être décrit.

Ce qui précède vaut que les chocs C1 et C2 soient appliqués sur l'aile avant 5 ou sur le capot avant 2, puisque ce dernier est en appui sur les ailes avant du véhicule automobile.

Les chocs du premier type et ceux du deuxième type sont des chocs globalement descendants, appliqués sur le dessus du capot 2 et/ou de l'une des ailes avant 5 du véhicule automobile. Les zones frangibles 26 et les protubérances 7A et 7B forment donc des amortisseurs de tels chocs, qui peuvent notamment être des impacts de tête.

A cet égard, il convient de noter que, lorsqu'un piéton est percuté au niveau des jambes par un véhicule automobile, il est généralement renversé sur le capot 2 et/ou sur l'une des ailes avant du véhicule automobile, auquel cas sa tête heurte bien souvent le dessus de ce capot et/ou de l'une de ces ailes.

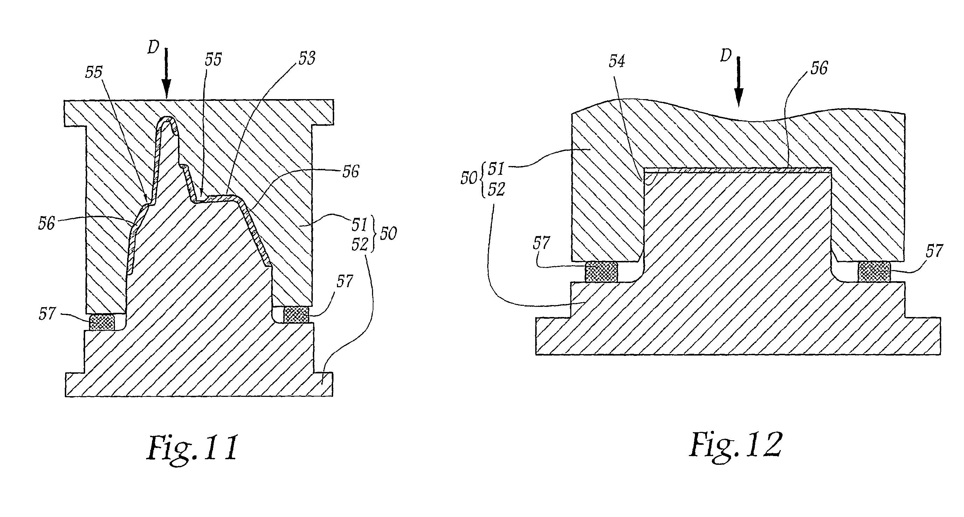

L'élément 4 est moulé à l'aide du moule 50 qui est représenté aux figures 9 à 12 et qui comprend une partie supérieure et mobile verticalement 51 et une partie inférieure et fixe 52. Cette partie supérieure 51 et cette partie inférieure 52 du moule 50 sont respectivement portées par la partie mobile et la partie fixe d'une presse verticale non représentée. Elles délimitent conjointement une chambre de moulage 53 dans laquelle débouche un conduit d'injection non visible sur les figures 9 à 12. Elle délimite également un passage d'évacuation 54 qui communique avec la chambre de moulage 53 et qui est visible aux figures 10 et 12.

Sur les figures 9 et 11, des portions de la chambre 54 sont référencées 55 et correspondent aux zones frangibles 26. Elles se trouvent entre la partie fixe 52 et la partie mobile 51 du moule 50.

Pour fabriquer l'élément 4, on commence par fermer partiellement le moule 50, après quoi il est tel qu'illustré aux figures 9 et 10. Ensuite, on injecte dans la chambre de moulage 53 une quantité de pâte à mouler 56 supérieure à celle nécessaire au moulage de l'élément 4. La pâte à mouler 56 se répartit alors dans la majeure partie de la chambre de moulage 53, puisque le moule 50 est partiellement fermé. En d'autres termes, suite à l'injection de la pâte à mouler 56, l'élément 4 est déjà partiellement moulé.

Une fois achevée l'injection de la pâte à mouler 56, on déplace la partie mobile 51 dans la direction indiquée par la flèche D, c'est-à-dire vers la partie fixe 52, si bien que la pâte à mouler 56 flue entre ces parties fixe 52 et mobile 51 et comble la chambre de moulage 53. Le déplacement vertical de la partie mobile 51 du moule 50 est sensiblement perpendiculaire aux zones frangibles 26. Lors de ce déplacement, de la pâte à mouler 56 s'échappe des portions 55 qui s'amincissent progressivement. Le surplus de pâte à mouler 56 dans le moule 50 s'échappe par le passage d'évacuation 54 et ne s'oppose donc pas au rapprochement des parties 51 et 52 du moule 50 jusqu'à ce que les zones frangibles 26 atteignent l'épaisseur voulue. Ce surplus de pâte formera la carotte représentée et référencée 58 sur la figure 4.

Lorsqu'elle bute contre des cales d'appui 57 équipant la partie fixe 52 du moule 50, la partie mobile 51 est stoppée. Le moule 50 délimite alors, aux retraits près, la forme finale de l'élément 4. La pâte 56 est alors polymérisée par cuisson.

Après son démoulage, l'élément 4 est débarrassé de la carotte 58 et d'une carotte 59 qui s'est formée dans le canal d'injection et qui est représentée à la figure 4.

L'invention ne se limite pas au mode de réalisation décrit précédemment. En particulier, la zone frangible 26 peut être fragilisée en certains endroits, notamment à ses quatre coins, afin que la rupture s'amorce au niveau de ces endroits. La fragilisation de la zone frangible 26 peut, par exemple, être le fait de trous ou d'amincissements locaux.

De plus, chacune des parois 29 et 30 peut être en tout ou partie supprimée ou remplacée par un voile mince qui, n'étant pas rigide, a comme fonction de faciliter le moulage de la protubérance dont il fait partie.

En outre, la pâte à mouler 56 peut ne pas être injectée dans le moule 50 partiellement fermé, mais être déposée dans ce moule ouvert.

## Revendications

1. Elément intermédiaire de support d'une aile avant (5) d'un véhicule automobile, cet élément de support étant à même d'être monté sur une poutre supérieure (3) du châssis du véhicule automobile et comportant un corps (6) et au moins une protubérance sécable (7A, 7B) qui est en saillie vers le haut et à laquelle est destinée à être fixée ladite aile avant (5), ladite protubérance (7A, 7B) comportant au moins une paroi avant (28) reliée par une zone frangible (26) audit corps (6), une paroi arrière (27) reliée par la zone frangible (26) audit corps (6) et une troisième paroi (29, 30) que la zone frangible (26) relie audit corps (6) et qui relie rigidement la paroi avant (28) et la paroi arrière (27) l'une à l'autre.

2. Elément intermédiaire de support selon la revendication 1, **caractérisé en ce qu'**à l'opposé de la troisième paroi (29, 30), la protubérance sécable (7A, 7B) comporte une quatrième paroi (29, 30) que la zone frangible (26) relie audit corps (6) et qui relie rigidement la paroi avant (28) et la paroi arrière (27) l'une à l'autre.

3. Elément intermédiaire de support selon la revendication 2, **caractérisé en ce que** la zone frangible (26) entoure la protubérance sécable (7A, 7B).

4. Elément intermédiaire de support selon l'une quelconque des revendications précédentes, **caractérisé en ce que** la zone frangible est une zone amincie (26) ayant une épaisseur moindre notamment que le corps (6) et que la paroi avant (28), la paroi arrière (27) et la troisième paroi (30) de la protubérance (7A, 7B).

5. Elément intermédiaire de support selon l'une quelconque des revendications précédentes, **caractérisé en ce que** la troisième paroi (30) de la protubérance (7A, 7B) est percée d'un trou (18) pour le passage de moyens (19) de fixation de l'aile (5) à la protubérance (7A, 7B).

6. Elément intermédiaire de support selon l'une quelconque des revendications précédentes, **caractérisé en ce que** ledit corps (6) comporte une paroi supérieure (9) qui est pourvue de la protubérance (7A, 7B), au moins une rampe supérieure et oblique (25) de dégagement sur le côté d'un rebord (5a) de l'aile avant (5) équipant la paroi supérieure (9) et, à son point le plus bas, atteignant un bord latéral de cette paroi supérieure (9).

7. Elément intermédiaire de support selon l'une quelconque des revendications précédentes, **caractérisé en ce qu'**il est moulé en un polymère thermodurcissable.

8. Elément intermédiaire de support selon la revendication 7, **caractérisé en ce que** le polymère thermodurcissable est chargé en fibres et en particules non filiformes.

9. Elément intermédiaire de support selon la revendication 8, **caractérisé en ce qu'**il contient entre 25 et 40% en masse de polymère thermodurcissable, entre 18 et 25% en masse de fibres de verre et entre 40 et 50% en masse de particules non filiformes.

10. Elément intermédiaire de support selon l'une quelconque des revendications 7 à 9, **caractérisé en ce que** le polymère thermodurcissable est électriquement conducteur.

11. Elément intermédiaire de support selon l'une quelconque des revendications précédentes, **caractérisé en ce qu'**il comporte des moyens (20, 23) de positionnement d'au moins un équipement avant du véhicule automobile, tel qu'un ensemble d'éclairage, une façade avant ou un capot.

12. Elément intermédiaire de support selon l'une quelconque des revendications précédentes, **caractérisé en ce qu'**en coupe selon un quelconque plan vertical antéro-postérieur, la protubérance (7A, 7B) est à l'intérieur d'un premier cercle d'enveloppe (U₁) qui a son centre (I₁) au milieu d'une portion avant de la zone frangible (26), devant la protubérance (7A, 7B), et passe par le milieu (I₂) d'une portion arrière de la zone frangible (26), derrière la protubérance (7A, 7B), et **en ce qu'**en coupe selon un quelconque plan vertical antéro-postérieur, la protubérance (7A, 7B) est à l'intérieur d'un deuxième cercle d'enveloppe (U₂) qui a son centre (I₂) au milieu de la portion arrière de la zone frangible (26) et passe par le milieu (I₁) de la portion avant de la zone frangible (26).

13. Procédé de moulage d'un élément intermédiaire de support (4) selon la revendication 4, dans lequel on utilise un moule (50) qui comprend au moins une partie fixe (52) et une partie mobile (51) et qui délimite une chambre de moulage (53) et au moins un passage d'évacuation (54) communiquant avec cette chambre de moulage, cette dernière comportant au moins une portion (55) qui correspond à ladite zone amincie (26) de l'élément intermédiaire de support (4) et qui se trouve entre la partie fixe (52) et la partie mobile (51) du moule (50), ce procédé comportant des étapes dans lesquelles :
- a) on approvisionne la chambre de moulage (53) avec plus de pâte à mouler (56) que ce qui est nécessaire au moulage de l'élément intermédiaire de support (4), puis
- b) on déplace la partie mobile (51) du moule (50) vers la partie fixe (52) du moule (50) de manière à faire fluer la pâte à mouler (56) entre ces parties fixe et mobile et à évacuer un surplus de pâte à mouler (56) par le passage d'évacuation (54), jusqu'à ce que le moule (50) délimite, aux retraits près, la forme finale de l'élément intermédiaire de support (4).

14. Procédé selon la revendication 13, **caractérisé en ce que** dans l'étape b), on déplace la partie mobile (51) du moule (50) selon une direction (D) sensiblement perpendiculaire à ladite zone amincie (26) de l'élément intermédiaire de support (4) en cours de moulage.

## Claims

1. An intermediate support element for a front fender (5) of a motor vehicle, this support element being able to be mounted on an upper beam (3) of the chassis of the motor vehicle and comprising a body (6) and at least one breakable protuberance (7A, 7B) projecting upward and to which said front fender (5) is intended to be fixed, said protuberance (7A, 7B) comprising at least one front wall (28) connected by a frangible zone (26) to said body (6), a rear wall (27) connected by the frangible zone (26) to said body (6) and a third wall (29, 30) which the frangible zone (26) connects to said body (6) and which rigidly connects the front wall (28) and the rear wall (27) to each other.

2. The intermediate support element as claimed in claim 1, **characterized in that** opposite the third wall (29, 30), the breakable protuberance (7A, 7B) has a fourth wall (29, 30) which the frangible zone (26) connects to said body (6) and which rigidly connects the front wall (28) and the rear wall (27) to each other.

3. The intermediate support element as claimed in claim 2, **characterized in that** the frangible zone (26) surrounds the breakable protuberance (7A, 7B).

4. The intermediate support element as claimed in any one of the preceding claims, **characterized in that** the frangible zone is a thinned zone (26) having a thickness which is in particular less than the body (6) and the front wall (28), the rear wall (27) and the third wall (30) of the protuberance (7A, 7B).

5. The intermediate support element as claimed in any one of the preceding claims, **characterized in that** the third wall (30) of the protuberance (7A, 7B) is drilled with a hole (18) for the passage of means (19) for fixing the fender (5) to the protuberance (7A, 7B).

6. The intermediate support element as claimed in any one of the preceding claims, **characterized in that** said body (6) has an upper wall (9) which is provided with the protuberance (7A, 7B), at least one upper oblique release ramp (25) on the side of an edge (5a) of the front fender (5) fitted to the upper wall (9) and, at its lowest point, reaching a side edge of this upper wall (9).

7. The intermediate support element as claimed in any one of the preceding claims, **characterized in that** it is molded in a thermosetting polymer.

8. The intermediate support element as claimed in claim 7, **characterized in that** the thermosetting polymer is filled with fibers and non-filiform particles.

9. The intermediate support element as claimed in claim 8, **characterized in that** it contains between 25 and 40% by weight of thermosetting polymer, between 18 and 25% by weight of glass fibers and between 40 and 50% by weight of non-filiform particles.

10. The intermediate support element as claimed in any one of claims 7 to 9, **characterized in that** the thermosetting polymer is electrically conductive.

11. The intermediate support element as claimed in any one of the preceding claims, **characterized in that** it has means (20, 23) for positioning at least one front piece of equipment of the motor vehicle, such as a lighting assembly, a front facade or a hood.

12. The intermediate support element as claimed in any one of the preceding claims, **characterized in that** in section along any antero-posterior vertical plane, the protuberance (7A, 7B) is inside a first enveloping circle (U₁) which has its center (I₁) in the middle of a front portion of the frangible zone (26), in front of the protuberance (7A, 7B), and passes through the middle (I₂) of a rear portion of the frangible zone (26), behind the protuberance (7A, 7B) , and **in that** in section along any antero-posterior vertical plane, the protuberance (7A, 7B) is inside a second enveloping circle (U₂) which has its center (I₂) in the middle of the rear portion of the frangible zone (26), and passes through the middle (I₁) of the front portion of the frangible zone (26).

13. A method for molding an intermediate support element (4) as claimed in claim 4, in which a mold (50) is used which comprises at least one fixed part (52) and one movable part (51) and which delimits a molding chamber (53) and at least one discharge passage (54) communicating with this molding chamber, the latter comprising at least one portion (55) which corresponds to said thinned zone (26) of the intermediate support element (4) and which is located between the fixed part (52) and the movable part (51) of the mold (50), this method comprising steps in which:
- a) the molding chamber (53) is provided with more molding paste (56) than is necessary for molding the intermediate support element (4), and then
- b) the movable part (51) of the mold (50) is moved toward the fixed part (52) of the mold (50) so as to cause the molding paste (56) to flow between these fixed and movable parts and to discharge a surplus of molding paste (56) through the discharge passage (54), until the mold (50) delimits, apart from shrinkage, the final form of the intermediate support element (4).

14. The method as claimed in claim 13, **characterized in that** in step b), the movable part (51) of the mold (50) is moved in a direction (D) substantially perpendicular to said thinned zone (26) of the intermediate support element (4) during molding.

## Patentansprüche

1. Zwischenträgerelement eines vorderen Kotflügels (5) eines Kraftfahrzeugs, wobei dieses Trägerelement auch dafür vorgesehen ist, an einem oberen Träger (3) des Fahrgestells des Kraftfahrzeugs angebracht zu werden, und umfassend einen Körper (6) und mindestens einen teilbaren Vorsprung (7A, 7B), der in der Höhe erhoben ist und an den der vordere Kotflügel (5) befestigt werden soll, wobei der Vorsprung (7A, 7B) mindestens eine Vorderwand (28), die über einen zerbrechlichen Bereich (36) mit dem Körper (6) verbunden ist, und eine Hinterwand (27), die über den zerbrechlichen Bereich (26) mit dem Körper (6) verbunden ist, und eine dritte Wand (29, 30) umfasst, die die Vorderwand (28) und die Hinterwand (27) fest miteinander verbindet.

2. Zwischenträgerelement nach Anspruch 1, **dadurch gekennzeichnet, dass** gegenüber der dritten Wand (29, 30) der teilbare Vorsprung (7A, 7B) eine vierte Wand (29, 30) umfasst, die der zerbrechliche Bereich (26) mit dem Körper (6) verbindet und die die Vorderwand (28) und die Hinterwand (27) fest miteinander verbindet.

3. Zwischenträgerelement nach Anspruch 2, **dadurch gekennzeichnet, dass** der zerbrechliche Bereich (26) den teilbaren Vorsprung (7A, 7B) umgibt.

4. Zwischenträgerelement nach einem der vorhergehenden Ansprüche, **dadurch gekennzeichnet, dass** der zerbrechliche Bereich ein sich verjüngender Bereich (26) mit einer Dicke ist, die insbesondere geringer als der Körper (6) und als die Vorderwand (28), die Hinterwand (27) und die dritte Wand (30) des Vorsprungs (7A, 7B) ist.

5. Zwischenträgerelement nach einem der vorhergehenden Ansprüche, **dadurch gekennzeichnet, dass** die dritte Wand (30) des Vorsprungs (7A, 7B) von einem Loch (18) zum Durchlassen von Mitteln (19) zum Befestigen des Kotflügels (5) an dem Vorsprung (7A, 7B) durchdrungen ist.

6. Zwischenträgerelement nach einem der vorhergehenden Ansprüche, **dadurch gekennzeichnet, dass** der Körper (6) eine obere Wand (9) umfasst, die mit dem Vorsprung (7A, 7B) versehen ist, wobei die obere Wand mit mindestens einer oberen Schräge (25) zur Lösung an der Seite einer Kante (5A) des vorderen Kotflügels (5) versehen ist und diese obere Schräge an ihrem niedrigsten Punkt einen seitlichen Rand dieser oberen Wand (9) erreicht.

7. Zwischenträgerelement nach einem der vorhergehenden Ansprüche, **dadurch gekennzeichnet, dass** es aus einem thermohärtbaren Polymer geformt ist.

8. Zwischenträgerelement nach Anspruch 7, **dadurch gekennzeichnet, dass** das thermohärtbare Polymer mit Fasern und nicht faserförmigen Partikeln geladen ist.

9. Zwischenträgerelement nach Anspruch 8, **dadurch gekennzeichnet, dass** es zwischen 25 und 40 % Masse thermohärtbares Polymer, zwischen 18 und 25 % Masse Glasfasern und zwischen 40 und 50 % Masse nicht faserförmige Partikel enthält.

10. Zwischenträgerelement nach einem der Ansprüche 7 bis 9, **dadurch gekennzeichnet, dass** das thermohärtbare Polymer elektrisch leitend ist.

11. Zwischenträgerelement nach einem der vorhergehenden Ansprüche, **dadurch gekennzeichnet, dass** es Mittel (20, 23) zum Positionieren mindestens einer vorderen Ausrüstung des Kraftfahrzeugs, wie einer Vorderbeleuchtungsgruppe, einer Vorderverkleidung oder einer Motorhaube, umfasst.

12. Zwischenträgerelement nach einem der vorhergehenden Ansprüche, **dadurch gekennzeichnet, dass** sich der Vorsprung (7A, 7B) in einem Schnitt entlang einer in der Richtung von vorne nach hinten ausgerichteten vertikalen Ebene in einem ersten Umfangskreis (U₁) befindet, dessen Mittelpunkt (l₁) in der Mitte eines vorderen Abschnitts des zerbrechlichen Bereichs (26) vor dem Vorsprung (7A, 7B) angeordnet ist, und der durch die Mitte (l₂) eines hinteren Abschnitts des zerbrechlichen Bereichs (26) hinter dem Vorsprung (7A, 7B) geht, und dass der Vorsprung (7A, 7B) sich in einem Schnitt entlang einer in der Richtung von vorne nach hinten ausgerichteten vertikalen Ebene in einem zweiten Umfangskreis (U₂) befindet, des5en Mittelpunkt (l₂) in der Mitte eines hinteren Abschnitts des zerbrechlichen Bereichs (26) angeordnet ist, und der durch die Mitte (l₁) des vorderen Abschnitts des zerbrechlichen Bereichs (26) geht.

13. Verfahren zum Formen eines Zwischenträgerelements (4) nach Anspruch 4, bei dem eine Form (50) verwendet wird, die mindestens einen festen Teil (52) und einen beweglichen Teil (51) umfasst und eine Formkammer (53) und mindestens einen Entleerungsdurchlass (54) begrenzt, der mit dieser Formkammer verbunden ist, wobei die Formkammer mindestens einen Teil (55) umfasst, der dem verjüngten Bereich (26) des Zwischenträgerelements (4) entspricht und sich zwischen dem festen Teil (52) und dem beweglichen Teil (51) der Form (50) befindet, wobei das Verfahren die folgenden Schritte umfasst:
- a) die Formkammer (53) wird mit mehr Formpaste (56), als zum Formen des Zwischenträgerelements (4) notwendig ist, versehen, dann
- b) wird der bewegliche Teil (51) der Form (50) in Richtung auf den festen Teil (52) der Form (50) bewegt, so dass die Formpaste (56) zwischen den festen und den beweglichen Teil fließt und ein Überstand an Formpaste (56) durch den Entleerungsdurchlass (54) entfernt wird, bis die Form (50) die Endform des Zwischenträgerelements (4) genau umschließt.

14. Verfahren nach Anspruch 13, **dadurch gekennzeichnet, dass** in Schritt b) während des Formens der bewegliche Teil (51) der Form (50) in eine im Wesentlichen zu dem verjüngten Bereich (26) des Zwischenträgerelements (4) senkrechte Richtung (D) verschoben wird.
